# EUROPÄISCHE PATENTSCHRIFT

(11) **EP 1 415 263 B1**
(45) Veröffentlichungstag und Bekanntmachung des Hinweises auf die Patenterteilung: **01.09.2010**
(21) Anmeldenummer: 02767060.3
(22) Anmeldetag: 29.07.2002
(51) Int. Cl.: G06K 7/00

(54) **VERFAHREN ZUR DATENÜBERTRAGUNG ZWISCHEN EINEM SCHREIB-LESE-GERÄT UND EINEM DATENSPEICHER, UND VERWENDUNG EINES VERFAHRENS IN EINEM IDENTIFIKATIONSSYSTEM**
METHOD FOR TRANSMITTING DATA BETWEEN A READ/WRITE DEVICE AND A DATA MEMORY, USE OF SAID METHOD IN AN IDENTIFICATION SYSTEM AND A READ/WRITE DEVICE AND MOBILE DATA MEMORY FOR AN IDENTIFICATION SYSTEM OF THIS TYPE
PROCEDE DE TRANSMISSION DE DONNEES ENTRE UN APPAREIL DE LECTURE/D'ECRITURE ET UNE MEMOIRE DE DONNEES, APPLICATION D'UN PROCEDE DANS UN SYSTEME D'IDENTIFICATION, APPAREIL DE LECTURE/D'ECRITURE ET MEMOIRE DE DONNEES MOBILE POUR UN TEL SYSTEME D'IDENTIFICATION

(30) Priorität: 30.07.2001 DE 10137247
(43) Veröffentlichungstag der Anmeldung: 06.05.2004
(73) Patentinhaber: SIEMENS AKTIENGESELLSCHAFT, 80333 München (DE)
(72) Erfinder: RAUSCHER, Kurt, A-3430 Tulln (AT); GILA, Janos, A-2340 Mödling (AT)
(86) Internationale Anmeldenummer: PCT/DE2002/002769
(87) Internationale Veröffentlichungsnummer: WO 2003/015006

(56) Entgegenhaltungen:
- EP-A- 1 107 163

## Beschreibung

Die Erfindung betrifft ein Verfahren zur Datenübertragung zwischen einem Schreib-Lese-Gerät und einem mobilen Datenspeicher. Die Erfindung betrifft ferner eine Verwendung eines solchen Verfahrens in einem Identifikationssystem mit einem Schreib-/Lesegerät und einem mobilen Datenspeicher.

Als Stand der Technik sind Identifikationssysteme bekannt, die zumindest ein stationäres Schreib-Lese-Gerät enthalten, welches Daten mit mobilen Datenspeichern über eine in der Regel auf Funk basierender Datenübertragungsstrecke berührungslos austauscht. Derartige Systeme werden in technischen Einrichtungen eingesetzt, wo eine Vielzahl von Objekten bzw. Gütern möglichst schnell und frei zumindest bewegt werden müssen. Die Objekte können dabei unterschiedlichster Art sein, z.B. Pakete in einer Versandeinrichtung, Montageteile in einer Fertigungsanlage, Gepäckstücke in einem Transportsystem und vieles mehr. Dabei ist es in aller Regel erforderlich, an bestimmten Stellen der Einrichtung, z.B. einer Fertigungsanlage, etwa die Art und den Zustand der in einer räumlichen Nähe zu diesen Stellen aktuell befindlichen Objekte schnell und ungehindert zu erfassen. Hierzu werden einerseits die Objekte mit mobilen Datenspeichern versehen, welche z.B. die Art und den aktuellen Zustand des Objektes kennzeichnende Daten enthalten. Andererseits sind an den bestimmten Stellen der Einrichtung Schreib-Lese-Geräte platziert und häufig mit zentralen Datenverarbeitungseinrichtungen verbunden.

Werden z.B. in einem Produktionsablauf solche Objekte in die räumliche Nähe einer ausgewählten Stelle befördert, so kann das dort angeordnete stationäre Schreib-Lese-Gerät auf berührungslose Weise die Daten in den mobilen Datenspeichern der in ihrem Erfassungsbereich aktuell befindlichen Objekte erfassen und gegebenenfalls verändern. Die Daten können dann mit Hilfe einer übergeordneten zentralen Datenverarbeitungseinrichtung zu unterschiedlichen Zwecken ausgewertet werden, z.B. zur Verfolgung des Laufes der mit den mobilen Datenspeichern versehenen Objekte und zur davon abhängigen Steuerung von Betriebsmitteln der jeweiligen technischen Einrichtung.

Ein Beispiel für ein derartiges Identifikationssystem ist im ISO/IEC JTC 1/SC 31 WG4-Normentwurf mit dem Titel "Radio-frequency Identification Standard for Item Management - Air Interface, Part 4 - Parameters for Air Interface Communication at 2.45 GHz (WD 18000-4) vom 8.4.2000 beschrieben.

Der nächste Stand der Technik, die EP 1 107 163 A1, offenbart ein Zeitschlitzverfahren zur Datenübertragung zwischen einem mobilen Datenträger und einem Schreib-Lese-Gerät.

Der Nachteil des in diesem Normentwurf vorgeschlagenen Verfahrens für ein Identifikationssystem ist es, dass insbesondere für Hochgeschwindigkeitsanwendungen, wie z.B. bei der Erfassung von Eisenbahnwagen, die realisierbare schnellst mögliche Auslesezeit von ca. 15ms nicht ausreichend ist.

Die Aufgabe der Erfindung ist es, ein Verfahren zur Datenübertragung zwischen einem Schreib-Lese-Gerät und einem Datenspeicher, und die Verwendung eines solchen Verfahrens in einem Identifikationssystem, sowie Schreib-/Lesegerät und mobiler Datenspeicher für ein solches Identifikationssystem anzugeben, welche eine schnellere Erfassung und Auswertung von mobilen Datenspeichern erlauben.

Die Aufgabe der Erfindung wird gelöst mit den Merkmalen des Verfahrens gemäß Patentanspruch 2 sowie dem in Anspruch 8 angegebenen Schreib-/Lesegerät und dem in Anspruch 1 angegebenen mobilen Hochgeschwindigkeits-Datenspeicher.

Das erfindungsgemäße Datenübertragungsverfahren beruht darauf, dass der Empfang und die Auswertung eines Identifizierungszeitschlitzes eines erreichbaren mobilen Datenspeichers in mindestens einem Auswertezeitschlitz innerhalb eines Teilrahmens durch das Schreib-/Lesegerät erfolgt.

Dies wird in den beiden folgenden Figuren näher erläutert. Dabei zeigt
- FIG 1 :: ein Beispiel für ein Verfahren zur Identifizierung eines mobilen Datenspeichers gemäß dem o.g. Norm- entwurf und
- FIG 2 :: ein Beispiel für ein Verfahren zur schnelleren Er- fassung und Auswertung eines mobilen Datenspeichers gemäß der Erfindung.

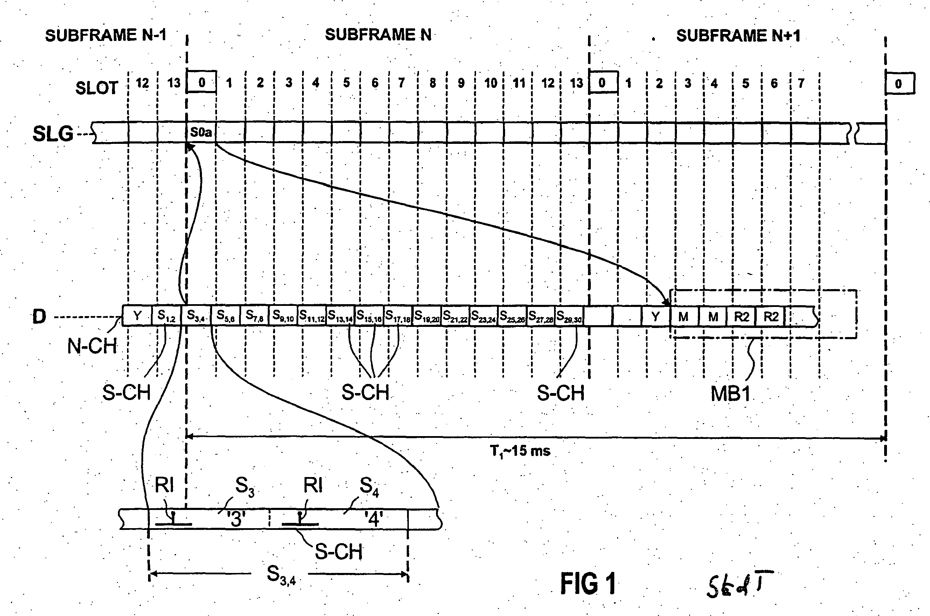

FIG 1 zeigt ein Beispiel für ein Verfahren zur Identifizierung eines mobilen Datenspeichers D gemäß dem o.g. Normentwurf. Dabei wird vorgeschlagen, die Datenübertragung zwischen einem Schreib-/Lese-Gerät SLG und mobilen Datenspeichern D in Zeitschlitze SLOT einzuteilen. Dabei werden mehrere Zeitschlitze SLOT zu einem Teilrahmen SUBFRAME = SLOT1 + SLOT2 + ... + SLOTn und mehrere Teilrahmen SUBFRAME zu einem Rahmen FRAME = SUBFRAME1 + SUBFRAME2 + ... + SUBFRAMEm zusammengefasst. Im Beispiel der FIG 1 wurde für die Anzahl der Zeitschlitze SLOT gemäß dem o.g. Normentwurf die Zahl 14 gewählt. Weiterhin sind die jeweiligen Teilrahmen SUBFRAME einzelnen mobilen Datenspeichern D zugeordnet.

Allgemein handelt es sich bei diesem Datenübertragungsverfahren von einem Schreib-/Lese-Gerät SLG zu einem mobilen Datenspeicher D sowie von einem mobilen Datenspeicher D zum Schreib-/Lese-Gerät SLG um ein Time-division-duplex-Verfahren TDD. Bei der Zuordnung der einzelnen Zeitschlitze SLOT oder Teilrahmen SUBFRAMES zu unterschiedlichen mobilen Datenspeichern D können kontinuierlich Daten zwischen einem Schreib-/Lese-Gerät SLG und einer größeren Anzahl von mobilen Datenspeichern D ausgetauscht werden. Ein solches Verfahren kann als Time-division-multiple access-Verfahren TDMA bezeichnet werden. Beide Verfahren basieren auf einem Zeitschlitzverfahren.

Im Beispiel der FIG 1 erfolgt gemäß dem o.g. Normentwurf die Abfrage auf Anwesenheit eines mobilen Datenspeichers D immer im ersten Zeitschlitz SLOTO, welcher einen Auswertezeitschlitz SOa darstellt. Dabei wird durch Aussenden eines unmodulierten Trägersignals ein im Empfangsbereich erfassbarer mobiler Datenspeicher D aufgefordert, diese Trägerfrequenz durch das sog. Back-Scattering-Verfahren mit einer Antwortsequenz N-CH zu modulieren. Im Beispiel der FIG 1 ist eine beispielhafte zyklische gesendete Antwortsequenz N-CH zu sehen. Die gesendete Antwortsequenz N-CH enthält entsprechend dem o.g. Normentwurf nach einem Einschwingzeitschlitz Y aufeinanderfolgende Identifizierungszeitschlitze S-CH, beginnend mit dem Identifizierungszeitschlitz S_{1,2} und endend mit dem Identifizierungszeitschlitz S_{29,30}. Die Identifizierungszeitschlitze S-CH enthalten dabei je zwei Halbzeitschlitze S1-S30, aus welchen durch Auswertung durch das Schreib-/Lese-gerät SLG je ein Referenzimpuls RI sowie ein Zählerstand ,1' bis '30' entsprechend der Nummerierung der Halbzeitschlitze S1-S30 abgeleitet werden kann. Im Beispiel FIG 1 ist dabei ein fortlaufender 5-bit-Zähler vorgesehen, wobei die möglichen Zählerstände '0' und '31' keine Verwendung finden. Der jeweilige Zählerstand dient dabei zur zeitlichen Synchronisierung zwischen dem Referenzimpuls RI des jeweiligen mobilen Datenspeichers D und der Zeitbasis des Schreib-/Lesegeräts SLG durch Umwandlung des Zählerstands in einen entsprechenden zeitlichen Versatz. Somit ist in dem Auswertezeitschlitz SOa im Zeitschlitz SLOT0 immer ein Halbzeitschlitz S1-S30 des entsprechenden Identifizierungszeitschlitzes S-CH zur Synchronisierung erfassbar.

Im Beispiel der FIG 1 ist die Erfassung des Halbzeitschlitzes S4 mit dem Zählerstand 4 erkennbar. Das Schreib-/Lesegerät SLG wertet diesen Halbzeitschlitzes S4 aus und synchronisiert sich zeitlich auf den erfassten mobilen Datenspeicher D. Im folgenden Teilrahmen SUBFRAME N+1 wird die zum mobilen Datenspeicher D zugehörige Datenspeicherkennung MB1 ausgewertet. Dabei wird ersichtlich, dass mindestens zwei Teilrahmen SUBFRAME N, SUBFRAME N+1 für die Erfassung und Auswertung eines mobilen Datenspeichers D benötigt werden. Dies entspricht einer Zeitdauer T₁ von ca. 15ms. Die o.g. Datenspeicherkennung MB1 enthält z.B. die ID (Identifikationsnummer) oder Herstellerangaben des erfassten mobilen Datenspeichers D. Im o.g. Normungsentwurf sind ergänzend dazu unterschiedliche Vorschläge zur Strukturierung der Datenspeicherkennung MB1 beschrieben. Die Auswahl eines geeigneten Vorschlags kann dabei anwendungsbezogen erfolgen.

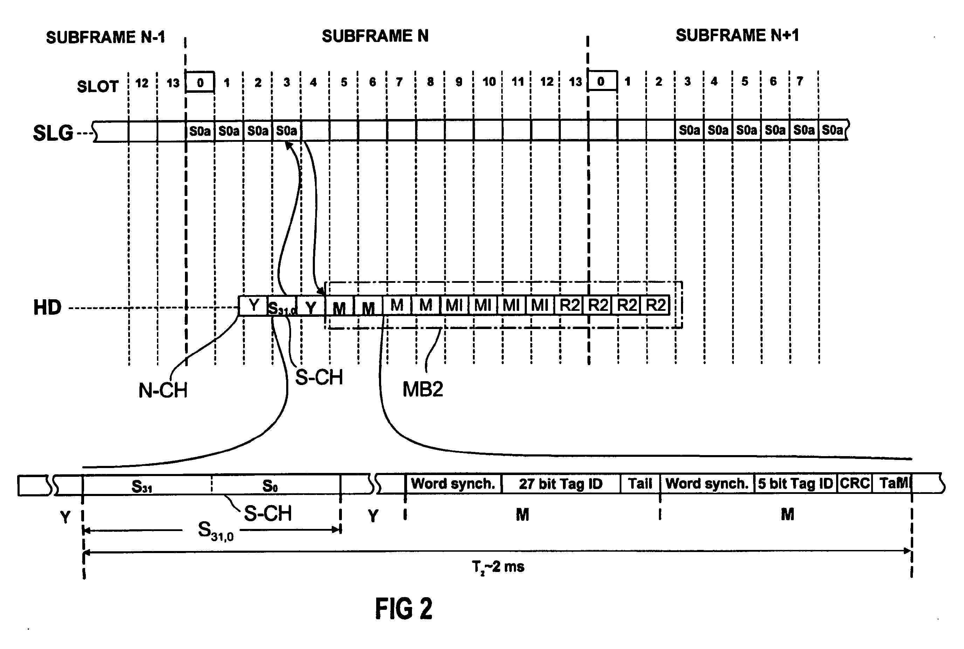

FIG 2 zeigt ein Beispiel für ein Verfahren zur schnelleren Erfassung und Auswertung eines mobilen Datenspeichers D,HD, insbesondere eines Hochgeschwindigkeits-Datenspeichers HD gemäß der Erfindung. Dabei ist erfindungsgemäß zumindest einem Zeitschlitz SLOT0-SLOT13 eines Teilrahmens SUBFRAME ein Auswertezeitschlitz SOa zugeordnet, in welchem insbesondere ein mobiler Hochgeschwindigkeits-Datenspeicher HD zur Identifizierung angesprochen werden kann. Weiterhin ist es möglich, dass im Zeitschlitz SLOT0 die anderen mobilen Datenspeicher D gemäß dem o.g. Normentwurf zur Abfrage angesprochen werden können. Im Beispiel der FIG 2 erfolgt im Zeitschlitz SLOT0 bis SLOT3 eine Abfrage, die im Zeitschlitz SLOT3 durch Auswertung des Identifizierungszeitschlitzes S-CH, S_{31,0} zum Erfolg führt. Danach wird die weitere Abfrage ab Zeitschlitz SLOT4 aufgrund der nun folgenden Auswertung des mobilen Hochgeschwindigkeits-Datenspeichers HD ausgesetzt.

Weiterhin werden erfindungsgemäß die beiden freien Zählerstände ,0' und ,31' verwendet, um einen neuartigen Hochgeschwindigkeits-Datenspeicher HD durch Auswertung eines Hochgeschwindigkeits-Identifizierungszeitschlitzes S_{31,0}, oder je nach Zählweise S_{0,31}, abzufragen und auswerten zu können. Erfindungsgemäß wird nach Auswertung einer der zum Hochgeschwindigkeits-Identifizierungszeitschlitz S_{31,0} zugehörigen Zeitschlitzhälften S0 oder S31 ein mobiler Hochgeschwindigkeits-Datenspeicher HD identifiziert.

Weiterhin wird erfindungsgemäß zumindest im darauffolgenden Zeitschlitz SLOT0-SLOT13 der zugehörige Datenspeicherkennungsblock MB2 ausgewertet. Im Beispiel der FIG 2 wird nach Identifizierung des Hochgeschwindigkeits-Datenspeichers HD im Zeitschlitz SLOT3 im Zeitschlitz SLOT5 mit der Auswertung des Datenspeicherkennungsblock MB2 begonnen. Im Beispiel der FIG 2 wurde aus Gründen der Einfachheit eine mögliche Strukturierung der Datenspeicherkennung MB1 gemäß der o.g. Normentwurfs ausgewählt. Im unteren Teil der FIG 2 ist dazu beispielhaft eine sehr kurze Struktur der Datenspeicherkennung MB2 dargestellt, welche die Auswertung einer 32bit-Identifizierungsnummer (27bit + 5bit) ermöglicht.

Erfindungsgemäß kann weiterhin das Verfahren in einem Identifikationssystem mit zumindest einem Schreib-/Lesegerät SLG und einem mobilen Datenspeicher HD verwendet werden. Weiterhin können das o.g. Schreib-/Lesegerät SLG zur Datenübertragung mit mindestens einem mobilen Datenspeicher HD sowie der mobile Datenspeicher HD zur Datenübertragung mit mindestens einem o.g. Schreib-/Lesegerät verwendet werden.

Damit ist der Vorteil verbunden, dass nicht gemäß des o.g. Normentwurfs bis zum nächsten Zeitschlitz SLOT0 des folgenden Teilrahmens SUBFRAME N+1 gewartet werden muss, um eine Abfrage eines mobilen Hochgeschwindigkeits-Datenspeichers HD durchzuführen.

Ein weiterer Vorteil ist, dass mit der darauffolgenden Auswertung der Datenspeicherkennung MB2 eine sehr schnelle Erfassung von Hochgeschwindigkeits-Datenspeichern HD möglich ist. Im Beispiel der FIG 2 beträgt die Erfassungsdauer T₂ dafür nur ca. 2ms i.Vgl. zu den eingangs genannten 15ms im Beispiel der FIG 1.

Ein weiter Vorteil ist es, dass durch das erfindungsgemäße Verfahren zur Datenübertragung weiterhin die anderen mobilen Datenspeicher D gemäß des o.g. Normentwurfs weiter erfasst und ausgewertet werden können.

## Patentansprüche

1. Mobiler Hochgeschwindigkeits-Datenspeicher (HD), **dadurch gekennzeichnet, dass** er im Betrieb Referenzimpulse (RI) und Zählerstände aussendet, wobei die Zählerstände alternierende und für einen Hochgeschwindigkeits-Datenspeicher (HD) charakteristische, von Zählerständen für normale Datenspeicher (D) abweichende Werte aufweisen.

2. Verfahren zur Datenübertragung zwischen mindestens einem Schreib-/Lesegerät (SLG) und mindestens einem mobilen Datenspeicher (D, HD) auf Basis eines Zeitschlitzverfahrens mit einer Folge von Zeitschlitzen (SLOT),
- wobei das Schreib-/Lesegerät (SLG) in jedem der Zeitschlitze (SLOT) abfragt, ob es von dem mobilen Datenspeicher (D, HD) einen Referenzimpuls (RI) und einen Zählerstand empfängt,
- wobei das Schreib-/Lesegerät (SLG) im Falle des Empfangs des Referenzimpulses (RI) und des Zählerstandes ermittelt, ob der den Referenzimpuls (RI) und den Zählerstand sendende mobile Datenspeicher (D, HD) als normaler Datenspeicher (D) oder als Hochgeschwindigkeits-Datenspeicher (HD) nach Anspruch 1 ausgebildet ist,
- wobei das Schreib-/Lesegerät (SLG) zumindest im Falle des Empfangs eines für den Hochgeschwindigkeits-Datenspeicher (HD) charakteristischen Zählerstandes unmittelbar darauf mit der Auswertung des mobilen Hochgeschwindigkeits-Datenspeichers (HD) beginnt.

3. Verfahren nach Anspruch 2, wobei das Schreib-/Lesegerät (SLG) zumindest im Falle des Empfangs eines für einen Hochgeschwindigkeits-Datenspeicher (HD) charakteristischen Zählerstandes die weitere Abfrage nach Referenzimpulsen (RI) und Zählerständen bis zur Beendigung der Auswertung des mobilen Hochgeschwindigkeits-Datenspeichers (HD) aussetzt.

4. Verfahren nach Anspruch 2 oder 3, wobei das Schreib-/Lesegerät (SLG) im Falle des Empfangs eines für einen normalen Datenspeicher (HD) charakteristischen Zählerstandes mit einem Zeitversatz mit der Auswertung des normalen Datenspeichers (D) beginnt, wobei der Zeitversatz von dem empfangenen Zählerstand abhängt.

5. Verfahren nach Anspruch 2, 3 oder 4, wobei zur Datenübertragung zwischen Schreib-/Lesegerät (SLG) und den mobilen Datenspeichern (D, HD) mehrere Zeitschlitze (SLOT) zu einem Teilrahmen (SUBFRAME) und mehreren Teilrahmen (SUBFRAME) zu einem Rahmen (FRAME) zusammengefasst sind und wobei die jeweiligen Teilrahmen (SUBFRAME) einzelnen mobilen Datenspeichern (D, HD) zugeordnet sind.

6. Verfahren nach einem der vorangegangenen Ansprüche, wobei der mobile Datenspeicher (D, HD) im Falle der Ausgestaltung als normaler Datenspeicher (D) zyklisch eine Sequenz von Referenzimpulsen (RI) und Zählerständen aussendet, wobei die Zählerstände innerhalb der Sequenz inkrementiert werden und wobei der mobile Datenspeicher (D, HD) im Falle der Ausgestaltung als Hochgeschwindigkeits-Datenspeicher (HD) jedem Referenzimpuls (RI) alternierend einen von zwei Zählerständen zuordnet, wobei die alternierenden Zählerstände in der Sequenz von inkrementierten Zählerständen nicht auftreten.

7. Verfahren nach einem der vorangegangenen Ansprüche, wobei die Zeitschlitze (SLOT) eine Schlitzdauer aufweisen, wobei die Referenzimpulse (RI) und die Zählerstände mit einer Zykluszeit aufeinander folgen und wobei die Schlitzdauer doppelt so groß wie die Zykluszeit ist.

8. Schreib-/Lesegerät (SLG) mit Sende- und Empfangsmitteln zur Durchführung des Verfahrens nach einem der vorangegangenen Ansprüche.

## Claims

1. Mobile high-speed data store (HD), **characterized in that** during operation it emits reference impulses (RI) and counter readings, wherein the counter readings have alternate values which are characteristic of a high-speed data store (HD) and which differ from counter readings for normal data stores (D).

2. Method for the transmission of data between at least one read/write unit (SLG) and at least one mobile data store (D, HD) on the basis of a timeslot method using a series of timeslots (SLOT),
- wherein in each of the timeslots (SLOT) the read/write unit (SLG) checks whether it is receiving a reference impulse (RI) and a counter reading from the mobile data store (D, HD),
- wherein the read/write unit (SLG), in the event of receiving the reference impulse (RI) and the counter reading, ascertains whether the mobile data store (D, HD) sending the reference impulse (RI) and the counter reading is in the form of a normal data store (D) or in the form of a high-speed data store (HD) according to Claim 1,
- wherein the read/write unit (SLG), at least in the event of receiving a counter reading which is characteristic of the high-speed data store (HD), then immediately starts to evaluate the mobile high-speed data store (HD).

3. Method according to Claim 2, wherein the read/write unit (SLG), at least in the event of receiving a counter reading which is characteristic of a high-speed data store (HD), suspends the further check for reference impulses (RI) and counter readings until the evaluation of the mobile high-speed data store (HD) has ended.

4. Method according to Claim 2 or 3, wherein the read/write unit (SLG), in the event of receiving a counter reading which is characteristic of a normal data store (HD), starts evaluating the normal data store (D) with a time lag, wherein the time lag is dependent on the received counter reading.

5. Method according to Claim 2, 3 or 4, wherein for the purpose of data transmission between the read/write unit (SLG) and the mobile data stores (D, HD), a plurality of timeslots (SLOT) are combined to form a subframe (SUBFRAME) and a plurality of subframes (SUBFRAME) are combined to form a frame (FRAME) and wherein the respective subframes (SUBFRAME) are associated with individual mobile data stores (D, HD).

6. Method according to one of the preceding claims, wherein the mobile data store (D, HD), if in the form of a normal data store (D), cyclically emits a sequence of reference impulses (RI) and counter readings, wherein the counter readings are incremented within the sequence and wherein the mobile data store (D, HD), if in the form of a high-speed data store (HD) , alternately assigns each reference impulse (RI) one of two counter readings, wherein the alternate counter readings do not appear in the sequence of incremented counter readings.

7. Method according to one of the preceding claims, wherein the time slots (SLOT) have a slot duration, wherein the reference impulses (RI) and the counter readings follow one another with a cycle time, and wherein the slot duration is twice as long as the cycle time.

8. Read/write unit (SLG) having transmission and reception means for carrying out the method according to one of the preceding claims.

## Revendications

1. Mémoire ( HD ) de données mobiles à grande vitesse, **caractérisée en ce qu'**elle émet en fonctionnement des impulsions ( RI ) de référence et des états de compteur, les états de compteur ayant des valeurs alternant et caractéristiques d'une mémoire ( HD ) de données à grande vitesse qui s'écartent d'états de compteur pour des mémoires ( D ) de données normales.

2. Procédé de transmission de données entre au moins un appareil ( SLG ) d'écriture/lecture et au moins une mémoire ( D, HD ) mobile de données sur la base d'un procédé à créneaux temporels comprenant une succession de créneaux ( SLOT ) temporels,
- dans lequel l'appareil ( SLV ) d'écriture/lecture interroge dans chacun des créneaux ( SLOT ) temporels, s'il est reçu une impulsion ( RI ) de référence et un état de compteur par la mémoire ( D, HD ) mobile de données,
- dans lequel l'appareil ( SLG ) d'écriture/lecture détermine, dans le cas de la réception de l'impulsion ( RI ) de référence et de l'état de compteur si la mémoire ( D, HD ) mobile de données envoyant l'impulsion ( RI ) de référence et l'état de compteur est constituée sous la forme d'une mémoire ( D ) normale de données ou d'une mémoire ( HD ) de données à grande vitesse suivant la revendication 1,
- dans lequel l'appareil ( SLG ) d'écriture/lecture commence, au moins dans le cas de la réception d'un état de compteur caractéristique d'une mémoire ( HD ) de données à grande vitesse, immédiatement ensuite à exploiter la mémoire ( HD ) mobile de données à grande vitesse.

3. Procédé suivant la revendication 2, dans lequel l'appareil ( SLV ) d'écriture/lecture repousse, au moins dans le cas de la réception d'un état de compteur caractéristique d'une mémoire ( HD ) de données à grande vitesse, l'interrogation supplémentaire sur des impulsions ( RI ) de référence et des états de compteur jusqu'à ce que l'exploitation de la mémoire ( D ) mobile de données à grande vitesse soit achevée.

4. Procédé suivant la revendication 2 ou 3, dans lequel l'appareil ( SLV ) d'écriture/lecture commence, dans le cas de la réception d'un état de compteur caractéristique d'une mémoire ( HD ) normale de données, avec un décalage dans le temps, l'exploitation de la mémoire ( D ) normale de données, le décalage dans le temps dépendant de l'état du compteur qui est reçu.

5. Procédé suivant la revendication 2, 3 ou 4, dans lequel, pour la transmission de données entre l'appareil ( SLG ) d'écriture/lecture et les mémoires ( D, HD ) mobiles de données, plusieurs créneaux ( SLOP ) temporels sont rassemblés en une sous-trame ( SUBFRAME ) et plusieurs sous-trames ( SUBFRAME ) en une trame ( TRAME ) et dans lequel on affecte les sous-trames ( SUBFRAME ) respectives à des mémoires ( D, HD ) mobiles de données individuelles.

6. Procédé suivant l'une des revendications précédentes, dans lequel la mémoire ( D, DH ) mobile de données émet, dans le cas de la conformation en mémoire ( D ) normale de données, cycliquement une séquence d'impulsions ( RI ) de référence et d'états de compteur, les états de compteur étant incrémentés dans la séquence et dans lequel la mémoire ( D, HD ) mobile de données affecte, dans le cas de la conformation en mémoire ( HD ) de données à grande vitesse, à chaque impulsion ( RI ) de référence en alternance, l'un de deux états de compteur, les états de compteur en alternance n'apparaissant pas dans la séquence d'états de compteur incrémentés.

7. Procédé suivant l'une des revendications précédentes, dans lequel les créneaux ( SLOT ) temporels ont une durée, les impulsions ( RI ) de référence et les états de compteur se succédant avec une durée de cycle et la durée des créneaux est deux fois plus grande que la durée de cycle.

8. Appareil ( SLV ) d'écriture/lecture ayant des moyens d'émission et de réception pour la mise en oeuvre du procédé suivant l'une des revendications précédentes.
